# EUROPÄISCHE PATENTANMELDUNG

(11) **EP 4 788 059 A1**
(43) Veröffentlichungstag der Anmeldung: **05.08.2026**
(21) Anmeldenummer: 26150601.8
(22) Anmeldetag: 07.01.2026
(51) Int. Cl.: H05B 6/12, A47J 27/00

(54) **GARGEFÄSS UND VERFAHREN ZUM BETREIBEN EINES GARGEFÄSSES**

(30) Priorität: 04.02.2025 DE 102025104016
(71) Anmelder: Miele & Cie. KG, 33332 Gütersloh (DE)
(72) Erfinder: Ennen, Volker, Dr., 32257 Bünde (DE); Metz, Thomas, 32257 Bünde (DE)

(57) **Zusammenfassung**

Die Erfindung betrifft ein Gargefäß (100) mit einem ersten Heizelement (115), welches an einem Gargefäßboden (155) in einem ersten Heizbereich (135) angeordnet ist und zumindest einem zweiten Heizelement (120) welches an dem Gargefäßboden (155) in einem vom ersten Heizbereich (135) unterschiedlichen, zweiten Heizbereich (140) angeordnet ist, wobei das erste Heizelement (115) dazu ausgeformt und/oder ansteuerbar ist, um den Gargefäßboden (155) im ersten Heizbereich (135) auf eine erste Temperatur aufzuheizen und/oder wobei das das zweite Heizelement (120) dazu ausgeformt und/oder ansteuerbar ist, um den Gargefäßboden (155) im zweite Heizbereich (140) auf eine zweite Temperatur aufzuheizen.

## Beschreibung

Die Erfindung betrifft ein Gargefäß und ein Verfahren zum Betreiben eines Gargefäßes gemäß den Hauptansprüchen.

DE 102015205496 A1 beschreibt eine Flüssigkeitsaufheizeinrichtung mit einer flächigen Heizeinrichtung (z. B. Dickschichtheizelement) und einer flächigen Sensorschicht.

Der hier vorgestellte Ansatz stellt sich die Aufgabe, ein verbessertes Gargefäß und ein verbessertes Verfahren zum Betreiben eines Gargefäßes zu schaffen.

Erfindungsgemäß wird diese Aufgabe durch ein Gargefäß und ein Verfahren zum Betreiben eines Gargefäßes mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einem Verhindern einer Überhitzung des Gargeschirrs aus einem lokal variablen Erhitzen der verschiedenen Heizbereiche.

Es wird ein Gargefäß mit einem erste Heizelement, welches an einem Gargefäßboden in einem ersten Heizbereich angeordnet ist und zumindest einem zweiten Heizelement welches an dem Gargefäßboden in einem vom ersten Heizbereich unterschiedlichen, zweiten Heizbereich angeordnet ist, vorgestellt, wobei das erste Heizelement dazu ausgeformt und/oder ansteuerbar ist, um den Gargefäßboden im ersten Heizbereich auf eine erste Temperatur aufzuheizen und/oder wobei das zweite Heizelement dazu ausgeformt und/oder ansteuerbar ist, um den Gargefäßboden im zweiten Heizbereich auf eine zweite, beispielsweise von der ersten Temperatur unterschiedlichen, Temperatur aufzuheizen.

Das Gargefäß kann gemäß einer Ausführungsform als ein Topf ausgeformt sein. Alternativ kann das Gargefäß auch ein Bräter, eine Fritteuse oder eine Pfanne sein. Das erste Heizelement kann hier als ein Heizkörper ausgeformt sein. Außerdem kann das zweite Heizelement ebenfalls als ein Heizkörper ausgeformt sein. Der erste Heizbereich sowie der zweite Heizbereich können dabei jeweils einen Abschnitt des Gargefäßbodens im Bereich des ersten bzw. zweiten Heizelementes ausformen. Dabei können das erste Heizelement und das zweite Heizelement dazu ausgeformt sein, um unterschiedliche Temperaturen in jedem der Heizbereiche zu generieren. Somit können verschiedene Abschnitte des Bodens verschieden beheizt werden.

Gemäß einem Aspekt ist es möglich, dass die Heizelemente am Boden eines Gargefäßes in den verschiedenen Abschnitten unterschiedlich ausgestaltet sind, so dass der Boden eines Gargefäßes inhomogen bedeckt bzw. die Heizelemente inhomogen verteilt sind. Dadurch kann an unterschiedlichen Stellen des Bodens unterschiedlich viel Energie vom Gargut aufgenommen werden. Dies führt bei homogener Beheizung des Gargefäßbodens zu unterschiedlichen Bodentemperaturen. Die beschriebene Erfindung kann durch eine Beheizung verschiedener Abschnitte des Bodens mit unterschiedlicher Leistung eine im Wesentlichen gleiche Temperatur des Bodens erreichen.

Dabei können gemäß einer Ausführungsform das erste oder zumindest das zweite Heizelement als ein PTC-Heizelement oder als ein Dickschichtheizkörper ausgeformt sein. Dadurch kann eine Überheizung des ersten bzw. des zweiten Heizelements verringert oder verhindert werden.

Außerdem können gemäß einer Ausführungsform das erste Heizelement und zumindest das zweite Heizelement elektrisch parallelgeschaltet sein. Dadurch könne das erste und das zweite Heizelement gleichzeitig betrieben und einfach mit Energie versorgt werden.

Das Gargefäß kann gemäß einer Ausführungsform zumindest einen ersten Temperatursensor umfassen, welcher zum Erkennen der ersten Temperatur im ersten Heizbereich ausgebildet ist, wobei das erste Heizelement in Abhängigkeit von der ersten Temperatur ansteuerbar ist und mit zumindest einem zweiten Temperatursensor, zum Erkennen der zweiten Temperatur im zweiten Heizbereich, wobei das zweite Heizelement in Abhängigkeit von der zweiten Temperatur ansteuerbar ist. Durch die Verwendung der entsprechenden Temperatursensoren und der Ansteuerungsmöglichkeit zumindest eines der Heizelemente kann eine Gefahr der Überhitzung eines Heizbereichs reduziert oder allgemein eine Regelung der Temperatur in zumindest einem der Heizbereiche effizient und einfach vorgenommen werden.

Eine Steuereinheit kann gemäß einer Ausführungsform dazu gedacht sein, um ansprechend auf ein Signal des ersten Temperatursensor das erste Heizelement anzusteuern und ansprechend auf ein Signal des zweiten Temperatursensor das zweite Heizelement anzusteuern. Dadurch können das erste Heizelement und das zweite Heizelement unabhängig voneinander gestreut werden.

Dabei kann die Steuereinheit gemäß einer Ausführungsform ausgebildet sein, um eine Energiezufuhr zum ersten Heizelement zu reduzieren oder zu unterbrechen, wenn das Signal des ersten Temperatursensors eine Temperatur repräsentiert, welche über einer ersten Schwellwerttemperatur liegt oder um eine Energiezufuhr zum zweiten Heizelement zu reduzieren und/oder unterbrechen, wenn das Signal des zweiten Temperatursensors ein Temperatur repräsentiert, welche über einer zweiten Schwellwerttemperatur liegt. Dadurch kann eine Überhitzung und Beschädigung des Gargefäßes verhindert werden, und gefährlich hohe Temperaturen vermieden werden. Ferner kann damit gegebenenfalls eine Energieeinsparung ermöglicht werden, wenn Bereiche, an denen sich kein Gargut befindet, nicht zu stark geheizt werden. Alternativ können weitere dem Fachmann bekannte Verfahren zur Leistungsregelung mit dem Ziel der Einstellung einer Temperatur wie beispielsweise PID-Regelung und/oder Fuzzy-Logic-Regelung und/oder adaptive Regelung und/oder modellprädiktive Regelung und/oder KI-basierte Regelung angewendet werden.

Die Steuereinheit kann dabei gemäß einer Ausführungsform beispielsweise in einem Griff des Gargefäßes angeordnet sein. Dadurch kann die Steuereinheit, welche beispielsweise als eine Mikroelektronik-Komponente ausgestaltet ist, von der Hitze zumindest eines der Heizelemente abgeschirmt sein.

Der erste Temperatursensor und der zweite Temperatursensor können beispielsweise als ein Bimetallschalter und/oder Thermoelement und/oder Thermistor und/oder Widerstandsthermometer (RTD) und/oder Halbleiter-Temperatursensor und/oder Infrarot-Temperatursensor ausgeformt sein. Hierdurch kann eine technisch sehr einfach ausgestaltetet Lösung für einen Temperatursensor verwendet werden.

Das Gargefäß kann gemäß einer Ausführungsform eine Energieaufnahmeeinheit aufweisen, welche beispielsweise als Induktionsspule oder Netzanschlussschnittstelle ausgebildet ist, die ausgebildet ist, um elektrische Energie zum Betreiben des ersten oder des zweiten Heizelements zu liefern. Die Energieaufnahmeeinheit kann dabei genauer eine Energie-Harvesting Spule sein, welche Energie an die Heizelemente und/oder den oder die Temperatursensoren, und/oder die Steuereinheit liefern oder aber als ein Stecker ausgeformt sein. Somit kann das Gargefäß in Verbindung mit einem Induktionsfeld und einer Steckdose verwendet werden, was das Gargefäß sehr flexibel ausgestaltet.

Das Gargefäß kann gemäß einer Ausführungsform zumindest ein drittes Heizelement aufweisen, welches an dem Gargefäßboden in einem vom ersten Heizbereich und zweiten Heizbereich unterschiedlichen dritten Heizbereich angeordnet ist, wobei das dritte Heizelement dazu ausgeformt oder ansteuerbar ist, um den Gargefäßboden im dritten Heizbereich auf eine von der ersten und der zweiten Temperatur unterschiedlichen dritten Temperatur aufzuheizen. Das dritte Heizelement kann dabei wie das erste und das zweite Heizelement ausgeformt sein. Alternativ kann das Gargefäß auch ein viertes und ein fünftes bzw. noch weiteres Heizelement aufweisen. Je mehr Heizelemente das Gargefäß hat, desto gezielter und fein einstellbar kann eine Erhitzung von in dem Gargefäß befindlichem Gargut stattfinden. Das kann auch zu einer optimalen Energiezufuhr für Lebensmittel bieten, die nicht die gesamte Fläche eines Gargefäßes belegen, wie Steak, Fisch, gebratene Zucchini, aufzutauender Eintopf.

Dabei können das erste und das zweite und dritte Heizelement gemäß einer Ausführungsform in Spalten und Zeilen oder matrixförmig angeordnet sein. Dadurch lassen sich auch die Heizbereiche leichter und eine Fläche des Gargefäßbodens füllend anordnen und entsprechend leicht eine Temperatur einstellen.

Ein Aspekt ist es, dass mit einem vierten und/oder fünften und/oder sechsten Heizelement noch weitere Heizelemente vorgesehen sind.

Ferner wird gemäß einer Ausführungsform ein Verfahren zum Betreiben eines Gargefäßes vorgestellt, wobei das Verfahren einen Schritt des Ansteuerns des ersten Heizelementes und des zweiten Heizelementes aufweist, um den Gargefäßboden im ersten Heizbereich auf eine erste Temperatur aufzuheizen und den Gargefäßboden im zweiten Heizbereich auf eine zweite Temperatur aufzuheizen. Auch durch eine solche Ausführungsform können die hier vorgestellten Vorteile schnell und effizient realisiert werden.

Der hier vorgestellte Ansatz schafft ferner eine Steuereinrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinrichtung einlesbares Sensorsignal darstellen. Ein Ausgangssignal kann ein Steuersignal oder ein Datensignal darstellen, das an einer Ausgangsschnittstelle der Steuereinrichtung bereitgestellt werden kann. Die Steuereinrichtung kann ausgebildet sein, um die Ausgangssignale unter Verwendung einer in Hardware oder Software umgesetzten Verarbeitungsvorschrift zu bestimmen. Beispielsweise kann die Steuereinrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinrichtung ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem medizinischen Gerät, wie einem Reinigungs- oder Desinfektionsgerät oder einem Kleinsterilisator, eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Gargefäßes;
- Figur 2: eine Darstellung eines Ablaufs einer hier vorgestellten Vorgehensweise; und
- Figur 3: ein Ablaufdiagramm eines Ausführungsbeispiels eines Verfahrens zum Betreiben eines Gargefäßes.

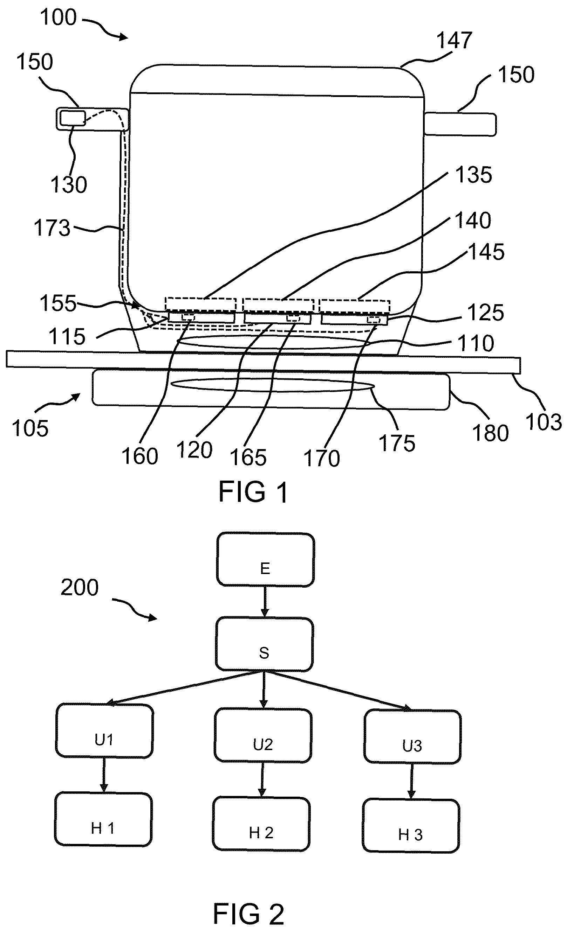

Figur 1 zeigt eine schematische Darstellung eines Ausführungsbeispiels eines Gargefäßes 100. Das Gargefäß 100 ist hier auf einer Kochfeldplatte 103 eines Kochfelds 105 platziert. Das Gargefäß 100 weist eine Energieaufnahmeeinheit **110** auf, welche Energie an ein erstes Heizelement 115, ein zweites Heizelement 120 und ein drittes Heizelement 125 sowie an eine Steuereinheit 130 leitet. Außerdem umfasst das Gargefäß 100 einen ersten Heizbereich 135, einen zweiten Heizbereich 140 und einen dritten Heizbereich 145. Auf dem Gargefäß 100 ist außerdem ein Deckel 147.

Das Gargefäß 100 ist gemäß dem hier gezeigten Ausführungsbeispiel als ein Topf mit zwei Griffen 150 ausgeformt. In dem linken Griff 150 ist hier die Steuereinheit 130 angeordnet. An einem Gargefäßboden 155 sind der erste Heizbereich 135, der zweite Heizbereich 140 und der dritte Heizbereich 145 ausgebildet. Diese sind beispielsweise nebeneinander in Spalten oder in einer Matrix angeordnet. Außerdem überschneiden sich die der erste Heizbereich 135, der zweite Heizbereich 140 und der dritte Heizbereich 145 an keiner Stelle. Dabei wird der erste Heizbereich 135 von dem ersten Heizelement 115, der zweite Heizbereich 140 von dem zweiten Heizelement 120 und der dritte Heizbereich 145 von dem dritten Heizelement 125 beheizt. Jedes der drei Heizelemente 115, 120, 125 ist beispielsweise als ein PTC-Heizkörper oder beispielsweise als ein Dickschichtheizkörper ausgeformt. Denkbar ist jedoch auch, dass zumindest eines oder alle der Heizelemente als ansteuerbares Widerstandsheizelement oder Strahlungsheizelement ausgestaltet ist. Das erste Heizelement 115, das zweite Heizelement 120 und das dritte Heizelement 125 sind gemäß dem hier gezeigten Ausführungsbeispiel unter dem Gargefäßboden 155 befestigt, um den Gargefäßboden 155 von unter her zu erhitzen. Zudem sind das erste Heizelement 115, das zweite Heizelement 120 und das dritte Heizelement 125 elektrisch parallelgestaltet. Dabei können das erste Heizelement 115, das zweite Heizelement 120 und das dritte Heizelement 125 jedoch unterschiedlich schnell und auf unterschiedliche Temperaturen erhitzt werden. Dabei kann optional, aber nicht zwingend, auch ein Heatspreader an den Heizelementen 115, 120, 125 und/oder heizelementübergreifend angebracht sein, um eine homogene Temperatur in und/oder ggf. zwischen den jeweiligen Heizbereichen zu erreichen.

Dabei umfasst das erste Heizelement 115 einen ersten Temperatursensor 160. Der erste Temperatursensor 160 ist dabei dafür gedacht, um eine erste Temperatur des ersten Heizbereichs 135 zu messen und eine Temperatur des ersten Heizelements 115 aufgrund der gemessenen Temperatur anzusteuern oder einen diese Temperatur am ersten Heizelement 115 an die Steuereinheit 130 zu senden. Beispielsweise kann der erste Temperatursensor 160 ein Signal ausgeben, um eine Aktivierung des ersten Heizelements 115 oder ein Abschalten des ersten Heizelements 115 einzuleiten. Das Gargefäß 100 weist gemäß dem in der Figur 1 dargestellten Ausführungsbeispiel auch einen zweiten Temperatursensor 165 und einen dritten Temperatursensor 170 auf. Der zweite Temperatursensor 165 und der dritte Temperatursensor 170 sind dabei wie der erste Temperatursensor 160 nun entsprechend zu Temperaturmessung für das zweite Heizelement 120 und für das dritte Heizelement 125 ausgeformt. Die Temperatursensoren 160, 165, 170, bzw. Einrichtung zur Temperaturbegrenzung, sind optional mit weiteren Einrichtungen z. B. für Einhaltung der Temperatur unterhalb des Geräts kombinierbar.

Somit entsteht eine Möglichkeit für eine flexible Anpassung der lokalen Heizleistung an lokal unterschiedliche Anforderungen (z. B. kühles Lebensmittel vorhanden oder nicht) und lokal unterschiedliche Temperaturen. Daraus resultiert ein optimales Garergebnis bei maximaler Sicherheit, Effizienz und optimaler Langlebigkeit des Geräts (z. B. der Heizelemente oder der Beschichtungen).

Bei Heizkörpern als Heizelementen, die auf Basis von lokalen Temperaturmessungen gezielt angesteuert werden können, kann die Temperatur gezielt an den Garprozess angepasst werden, z. B. 180°C für ein Braten mit kleiner Hitze bis zu 230°C für ein Braten mit großer Hitze. Dadurch kann z. B. in unterschiedlichen Garprogrammen eine unterschiedliche Grenztemperatur eingesetzt werden. Die Steuereinheit 130 ist dabei in der Lage, die Komponenten des Gargefäßes 100 anzusteuern. Dazu ist die Steuereinheit 130 über eine Leitung 173 mit dem ersten Heizelement 115, dem zweiten Heizelement 120 und dem dritten Heizelement 125, sowie dem ersten Temperatursensor 160, dem zweiten Temperatursensor 165 und dem dritten Temperatursensor 170 verbunden.

Der erste Temperatursensor 160, der zweite Temperatursensor 165 und der dritte Temperatursensor 170 geben gemäß dem hier dargestellten Ausführungsbeispiel jeweils ein Signal aus sobald ein Temperaturwert über einer Schwellwerttemperatur. Die Schwellwerttemperatur beträgt dabei beispielsweise 200°C, 300°C oder 500°C. Dabei können das erste Heizelement 115, das zweite Heizelement 120 und das dritte Heizelement 125 auch abgeschaltet oder deren Heizleistung reduziert werden, wenn die Schwellwerttemperatur erreicht wird. Beispielsweise sind der erste Temperatursensor 160, der zweite Temperatursensor 165 und der dritte Temperatursensor 170 als Bimetallschalter ausgeformt. Außerdem sind der erste Temperatursensor 160, der zweite Temperatursensor 165 und der dritte Temperatursensor 170 beispielsweise anhand einer erfassen Temperatur und/oder einer zeitlichen Temperaturänderung, insbesondere einer Änderung der Temperatur über der Zeit in Abhängigkeit von der durch das jeweilige Heizelement abgegebenen Leistung in dem jeweiligen Heizbereich dazu in der Lage, zu erkennen, wenn Lebensmittel sich in dem ersten Heizbereich 135, dem zweiten Heizbereich 140 oder dem dritten Heizbereich 145 befinden. Wenn sich keine Lebensmittel zum Erhitzen in einem der Heizbereiche 135, 140, 145 befinden, wird dieser Heizbereich 135, 140, 145 nicht weiter erhitzt. Wenn der erste Temperatursensor 160, der zweite Temperatursensor 165 und der dritte Temperatursensor 170, oder auch beispielsweise eine Sensorschicht, eine gegebenenfalls nur lokal vorhandene Überhitzung feststellt, sollte die Leistung nicht auf der gesamten Bodenfläche des Gargefäßes heruntergeregelt werden.

Der Gargefäßboden 155, oder hier auch Topfboden genannt, kann aus einem Material mit einem für Kochprozesse geeigneten Curie-Punkt hergestellt sein. In dem Fall ist die Energieaufnahmeeinheit 110 als eine Induktionsspule ausgeformt. Genauer ist die Energieaufnahmeeinheit 110 eine Energie-Harvesting-Spule mit der Funktion einer Repeater-Spule. Durch den Wechselstrom in der Induktionsspule des Energie-bereitstellenden Geräts wird ein Stromfluss in der Repeater-Spule angeregt. Dieser Stromfluss erwärmt wiederum den Topfboden oder ein Teil des Topfbodens induktiv oder es wird eine Spannung zum Betreiben der Heizelemente generiert. Durch die Curie-Eigenschaft des Topfbodens ändert sich die Energieaufnahme des Topfbodens lokal und temperaturabhängig. In Bereichen, in denen die durch die Materialparameter des Topfbodens und insbesondere die Curie-Temperatur des Materials vorgegebene Temperatur überschritten wird, wird mit einer geringeren Flächenleistung geheizt und eine lokale Überhitzung wird verhindert.

Der Topfboden wird in mehrere Bereiche aufgeteilt, deren Temperaturen beispielsweise getrennt geregelt werden können bzw. unabhängig voneinander durch Sicherheitselemente in der Abgabe einer Heizleistung begrenzt bzw. abgeschaltet werden können bzw. unabhängig voneinander selbstständig ihre Leistungsabgabe begrenzen. Dabei kann es sich z. B. um einzelne PTC-Heizkörper oder einzelne (Dickschicht-)Heizkörper mit einer nur für den jeweiligen Heizkörper wirkenden Temperatursensor 160, 165, 170 auch Sicherheitseinrichtung bezeichnet, handeln. Dadurch ist das hier beschriebene Ausführungsbeispiel ein Gargefäß 100 mit lokal unabhängig geregeltem oder begrenzten Wärmeeintrag, und eine Beheizung des Gargefäßbodens 155 ist lokal variabel.

Gemäß diesem Ausführungsbeispiel ist die Energieaufnahmeeinheit 110 als eine Induktionsspule ausgeformt, welche in der Lage ist Energie von einer Induktionsspule 175 einer Elektronikeinheit 180 des Kochfelds 105 aufzunehmen. Alternativ ist die Energieaufnahmeeinheit 110 als eine Netzanschlussschnittstelle ausgebildet, um auch unabhängig von der Induktionsspule 175 Energie aufnehmen zu können sodass das Gargefäß auch ohne eine entsprechende Induktionsspule 175 eines Induktionskochfeldes einsatzfähig sein kann.

Mehrere Heizelemente 115, 120, 125 mit PTC-Effekt (PTC = positiver Temperatur Koeffizient) werden beispielsweise im Wesentlichen parallel betrieben. Wenn sich der Widerstand eines Heizelements 115, 120, 125 aufgrund einer höheren Temperatur erhöht, verringert sich der Strom durch dieses Heizelement 115, 120, 125 und die thermische Leistungsabgabe wird lokal reduziert, während an anderen Stellen des Gargefäßbodens 155 weiterhin eine höhere Leistung abgegeben wird.

Der Stromfluss durch PTC-Elemente als Heizelemente kann parallel zum Topfboden erfolgen. Dabei ist z. B. ein 2-D Raster an Heizelementen 115, 120, 125 möglich, wobei die Heizelemente beispielsweise in Zeilen und Spalten oder matrixförmig angeordnet sind. Dieses hat den Vorteil, dass theoretisch jedes Heizelement 115, 120, 125 einzeln geregelt werden kann und somit eine sehr kleinteilige lokale Temperaturverteilung am Boden des Gargefäßes eingestellt werden kann. Alternativ kann auch ein Stromfluss senkrecht zum Topfboden genutzt werden. Das hat den Vorteil, dass mit nur einem Heizelement 115, 120, 125 und einer Kontaktierung des Heizelements 115, 120, 125 der Topfboden, oder Gargefäßboden 155, in nahezu unendlich viele parallelgeschaltete und selbstregelnde PTC-Heizelemente aufgeteilt werden kann.

PTC-Heizelemente können bei geringer Temperatur zunächst eine relativ hohen Stromaufnahme aufweisen. Wenn die verfügbare Leistung begrenzt ist (z. B. durch die Leistungsfähigkeit einer induktiven Stromversorgung) kann es vorteilhaft sein, die einzelnen PTC-Heizelemente nicht gleichzeitig, sondern zeitversetzt zu aktivieren. So kann der maximale Strom reduziert werden. Dabei können optional die am Häufigsten genutzten Bereiche des Gargefäßes 100 (z. B. mittig) zuerst aktiviert werden.

Bei PTC-Heizelementen mit einer durch den Aufbau des Heizelements vorgegebenen Temperaturabhängigkeit der Leistungsabgabe oder durch temperaturabhängige Schaltelemente wie z. B. Bimetallschalter begrenzten Heizelementen kann die Maximaltemperatur nicht im laufenden Betrieb beeinflusst werden. Die gesamte Heizleistung wird z. B. bei PTC-Heizkörpern und dem Topfboden aus Curie-Material durch eine Regelung des durch den Heizkörper bzw. die Spule fließenden Strom eingestellt. Die feste nicht regelbare Temperatur bezieht sich dabei nur auf die automatische Abschaltung bei Übertemperatur.

Als Beispiel wurde ein drahtlos mit Energie versorgtes Gargeschirr verwendet. Der Ansatz ist aber auch bei Gargeräten mit kabelgebundener Stromversorgung nutzbar.

Wenn ein Gargefäßboden 155 überall gleich stark geheizt wird, aber nur ein Teil des Bodens mit Lebensmittel bedeckt ist (z. B. Block gefrorener Eintopf, dickes Steak), sollte beispielsweise entweder für eine Vermeidung der Überhitzung der leeren Stelle der Energieeintrag so gering sein, dass das Lebensmittel nicht heiß wird oder bei einer Regelung auf die durch das Lebensmittel gekühlte Stelle, wird der freie Bereich sehr heiß. Das kann z. B. bei Dickschichtheizkörpern mit einem Überhitzungsschutz oder Pfannen mit einer temperaturempfindlichen Beschichtung problematisch sein. Deswegen wird in dem hier gezeigten Ausführungsbeispiel der Topfboden in mehrere Bereiche aufgeteilt, welche getrennt geregelt werden können bzw. unabhängig voneinander durch Sicherheitselemente in der Leistung begrenzt bzw. abgeschaltet werden können bzw. unabhängig voneinander selbstständig ihre Leistungsabgabe begrenzen. Dabei kann es sich z. B. um einzelne PTC-Heizkörper oder einzelne (Dickschicht-)Heizkörper mit einer nur für den jeweiligen Heizkörper wirkenden Sicherheitseinrichtung handeln.

Bei Gargefäßen mit einer Beschichtung sollte eine Überhitzung auch lokal vermieden werden. Wenn ein Lebensmittelzubereitungseinrichtung mit einem in Bezug auf zu hohe Temperaturen empfindlichen Heizelement 115, 120, 125 (z. B. Dickschichtheizkörper) beheizt wird, sollte die Leistung des Heizkörpers reduziert werden, sobald mindestens lokal eine Überhitzung festgestellt wird.

Für ein mit einem solchen Heizelement 115, 120, 125 beheiztes Gargefäß 100 folgt daraus, dass die Regelung erst zufriedenstellend erfolgen kann, wenn der Gargefäßboden 155 überall unterschiedlich stark geheizt wird, wenn nur ein Teil des Bodens mit Lebensmittel bedeckt ist (z. B. Block gefrorener Eintopf, dickes Steak). So kann vermieden werden, dass eine Überhitzung der leeren Stelle stattfindet und dass der Energieeintrag so gering wird, dass das Lebensmittel nicht heiß wird, oder dass bei einer Regelung auf die durch das Lebensmittel gekühlte Stelle, ein freier Bereich die Grenztemperatur überschreitet.

Figur 2 zeigt eine Darstellung eines Ablaufs einer hier vorgestellten Vorgehensweise 200.

Eine Energieaufnahmeeinheit E, welche als Induktionsspule ausgeformt ist, leitet hier Energie an eine Steuereinheit S. Die Steuereinheit S ist dabei als eine Elektronikeinheit oder ein UI (UI = unser Interface = Nutzerschnittstelle) ausgeformt. Die Steuereinheit S wiederum steuert einen ersten Temperatursensor U1 einen zweiten Temperatursensor U2 und einen dritten Temperatursensor U3 an. Temperatursensoren U1, U2, U3 sind beispielsweise Übertemperaturschalter, welche eine Temperatur erkennen und ansprechend darauf ein Signal ausgeben. Ein Signal des ersten Temperatursensors U1 repräsentiert eine erste Temperatur, ein Signal des zweiten Temperatursensors U2 repräsentiert eine zweite Temperatur und ein Signal des dritten Temperatursensors U3 repräsentiert eine dritte Temperatur. Dabei messen die Temperatursensoren U1, U2, U3 die Temperaturen von Heizelementen bzw. den jeweiligen Heizbereichen. Der erste Temperatursensor U1 misst die Temperatur eines ersten Heizelementes H1 bzw. ersten Heizbereichs, der zweite Temperatursensor U2 misst die Temperatur eines zweiten Heizelementes H2 bzw. des zweiten Heizbereichs und der dritte Temperatursensor U3 misst die Temperatur eines dritten Heizelementes H3 bzw. des dritten Heizbereichs.

Hier ist ein Ausführungsbeispiel mit mehreren nicht selbstbegrenzenden Heizelementen H1, H2, H3 gezeigt, welche durch Übertemperaturschalter, beispielsweise als Bimetallschalter ausgeformt, abgeschaltet werden, wenn eine kritische Temperatur erreicht ist.

Bei Umsetzungsansätzen mit einer Temperaturmessung im Bereich der einzelnen Heizelemente und einer im Wesentlichen darauf basierenden An- bzw. Abschaltung und/oder Leistungseinstellung für die einzelnen Heizelemente können die lokal bestimmten Temperaturen und insbesondere die Temperaturverläufe unter Berücksichtigung der lokal abgegebenen Leistung genutzt werden um ortsaufgelöst z. B. eine für die lokale Wärmekapazität charakteristische Kenngröße zu bestimmen. Daraus kann z. B. abgeleitet werden, ob nur lokal ein Lebensmittel vorhanden ist oder eine gleichmäßige Verteilung von Gargut vorliegt. Dies kann genutzt werden, um lokal unterschiedliche Regelparameter einzusetzen um z. B. eine Überhitzung von nicht durch Lebensmittel bedeckte Flächen schon vor dem Erreichen von kritischen Temperaturen zu begrenzen. Gleichzeitig kann durch die Vermeidung von unnötig hohen Temperaturen in Bereichen ohne Lebensmittelbedeckung der Energieverbrauch reduziert werden.

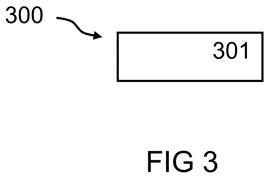

Figur 3 zeigt ein Ablaufdiagramm eines Ausführungsbeispiels eines Verfahrens 300 zum Betreiben eines Gargefäßes. Das Verfahren 300 hat einen Schritt 301 des Ansteuerns des ersten Heizelementes und des zweiten Heizelementes, um den Gargefäßboden im ersten Heizbereich auf eine erste Temperatur aufzuheizen oder den Gargefäßboden im zweiten Heizbereich auf eine zweite Temperatur aufzuheizen.

## Patentansprüche

1. Gargefäß (100) mit folgenden Merkmalen:
ein erstes Heizelement (115), welches an einem Gargefäßboden (155) in einem ersten Heizbereich (135) angeordnet ist; und
zumindest ein zweites Heizelement (120) welches an dem Gargefäßboden (155) in einem vom ersten Heizbereich (135) unterschiedlichen, zweiten Heizbereich (140) angeordnet ist,
wobei das erste Heizelement (115) dazu ausgeformt und/oder ansteuerbar ist, um den Gargefäßboden (155) im ersten Heizbereich (135) auf eine erste Temperatur aufzuheizen und/oder wobei das das zweite Heizelement (120) dazu ausgeformt und/oder ansteuerbar ist, um den Gargefäßboden (155) im zweite Heizbereich (140) auf eine zweite, Temperatur aufzuheizen.

2. Gargefäß (100) gemäß Anspruch 1, wobei das erste Heizelement (115) und/oder zumindest zweite Heizelement (120) als ein PTC-Heizelement und/oder als ein Dickschichtheizkörper ausgeformt ist.

3. Gargefäß (100) gemäß Anspruch 2, wobei das erste Heizelement (115) und zumindest das zweite Heizelement (120) elektrisch parallelgeschaltet sind.

4. Gargefäß (100) gemäß einem der vorangegangenen Ansprüche, wobei die erste Temperatur und die zweite Temperatur unterschiedlich oder mit einer Abweichung von weniger als 5 Kelvin gleich sind.

5. Gargefäß (100) gemäß einem der vorangegangenen Ansprüche, mit zumindest einem ersten Temperatursensor (160), zum Erkennen der ersten Temperatur im ersten Heizbereich (135), wobei das erste Heizelement (115) in Abhängigkeit von der ersten Temperatur ansteuerbar ist und/oder mit zumindest einem zweiten Temperatursensor (165), zum Erkennen der zweiten Temperatur im zweiten Heizbereich (140), wobei das zweite Heizelement (120) in Abhängigkeit von der zweiten Temperatur ansteuerbar ist.

6. Gargefäß (100) gemäß dem vorangegangenen Anspruch, mit einer Steuereinheit (130), um ansprechend auf ein Signal des ersten Temperatursensors (160) das erste Heizelement (115) anzusteuern und/oder ansprechend auf ein Signal des zweiten Temperatursensors (165) das zweite Heizelement (120) anzusteuern.

7. Gargefäß (100) gemäß einem der vorangegangenen Ansprüche, wobei die Steuereinheit (130) ausgebildet ist, um eine Energiezufuhr zum ersten Heizelement (115) zu reduzieren und/oder unterbrechen, wenn das Signal des ersten Temperatursensors (160) eine Temperatur repräsentiert, welche über einer ersten Schwellwerttemperatur liegt und/oder um eine Energiezufuhr zum zweiten Heizelement (120) zu reduzieren und/oder unterbrechen, wenn das Signal des zweiten Temperatursensors (165) ein Temperatur repräsentiert, welche über einer zweiten Schwellwerttemperatur liegt.

8. Gargefäß (100) gemäß einem der vorangegangenen Ansprüche, wobei die Steuereinheit (130) in einem Griff des Gargefäßes (100) angeordnet ist.

9. Gargefäß (100) gemäß einem der vorangegangenen Ansprüche, wobei der erste Temperatursensor (160) und/oder der zweite Temperatursensor (165) als ein Bimetallschalter und/oder Thermoelement und/oder Thermistor und/oder Widerstandsthermometer (RTD) und/oder Halbleiter-Temperatursensor und/oder Infrarot-Temperatursensor ausgeformt ist.

10. Gargefäß (100) gemäß einem der vorangegangenen Ansprüche, mit einer als Induktionsspule und/oder Netzanschlussschnittstelle aufweisenden Energieaufnahmeeinheit (110), die ausgebildet ist, um elektrische Energie zum Betreiben zumindest des ersten und/oder des zweiten Heizelements (120) zu liefern.

11. Gargefäß (100) gemäß einem der vorangegangenen Ansprüche, mit zumindest einem dritten Heizelement (125) welches an dem Gargefäßboden (155) in einem vom ersten Heizbereich (135) und/oder zweiten Heizbereich (140) unterschiedlichen dritten Heizbereich (145) angeordnet ist,
wobei das dritte Heizelement (125) dazu ausgeformt und/oder ansteuerbar ist, um den Gargefäßboden (155) im dritten Heizbereich (145) auf eine von der ersten und/oder zweiten Temperatur unterschiedlichen dritten Temperatur aufzuheizen.

12. Gargefäß (100) gemäß dem vorangegangenen Anspruch, wobei das erste und/oder zweite und/oder dritte Heizelement (115, 120, 125) in Spalten und Zeilen und/oder matrixförmig angeordnet sind.

13. Verfahren (300) zum Betreiben eines Gargefäßes (100) gemäß den vorangegangenen Ansprüchen, wobei das Verfahren (300) einen Schritt (301) des Ansteuerns des ersten Heizelementes (115) und des zweiten Heizelementes (120) aufweist, um den Gargefäßboden (155) im ersten Heizbereich (135) auf eine erste Temperatur aufzuheizen und/oder den Gargefäßboden (155) im zweiten Heizbereich (140) auf eine zweite Temperatur aufzuheizen.

14. Steuereinrichtung (130), die ausgebildet ist, um den Schritt (301) des Verfahrens (200) gemäß dem vorangegangenen Anspruch in zumindest einer entsprechenden Einheit auszuführen und/oder anzusteuern.
